# EUROPEAN PATENT APPLICATION

(11) **EP 2 418 576 A1**
(43) Date of publication of application: **15.02.2012**
(21) Application number: 10172485.4
(22) Date of filing: 11.08.2010
(51) Int. Cl.: G06F 9/44, A63F 13/00

(54) **Multi-platform development tool and method**

(71) Applicant: Sony Computer Entertainment Europe Ltd., London W1F 7LP (GB)
(72) Inventor: Forster, Richard, London W1F 7LP (GB); Withey, Rob Keith John, London W1F 7LP (GB)
(74) Representative: Turner, James Arthur

(57) **Abstract**

A multi-platform development tool for generating respective builds of an application on each of a plurality of different runtime platforms comprises a multi-platform instruction library comprising source code for one or more library functions, each of the one or more library functions having respective versions for the plurality of different runtime platforms, an asset repository operable to hold non-instruction application assets in a generic form, an instruction compiler for generating executable software instructions from source code, and an asset converter, and wherein for a respective build of an application on a respective target runtime platform, the asset converter is arranged in operation to identify one or more non-instruction assets to be used by the respective build of the application, the asset converter is arranged in operation to select one or more conversion processes to apply to a generic version of a respective non-instruction asset in accordance with one or more requirements of the target runtime platform for the respective build, the asset converter is arranged in operation to apply the or each selected conversion process to the generic version of a respective non-instruction asset to generate a modified version, the instruction compiler is arranged in operation to generate executable software instructions based upon the respective version of one or more library functions, and the multi-platform development tool is arranged in operation to associate the modified versions of the non-instruction assets with the executable software instructions.

## Description

The present invention relates to a multi-platform development tool and method.

Video game developers frequently wish to launch their game on several different gaming platforms, such as the personal computer (PC), the Sony® Playstation 3® entertainment system (PS3®) and the Sony Playstation Portable® entertainment system (PSP®). The incentive for the game developer is to increase the size of the market available to the game by accessing the respective markets for each platform, and hence increase the prospective profitability of the game. However, there are attendant costs involved with developing the game on different platforms that may either act as a disincentive or may reduce profitability. This is particularly the case for new gaming platforms, where the developer has little experience of developing games for the platform, and where the market for games on that platform is not fully known.

Therefore, to facilitate more cost-effective multiplatform games development, manufacturers of the games platforms often provide or contribute towards multi-platform development tools.

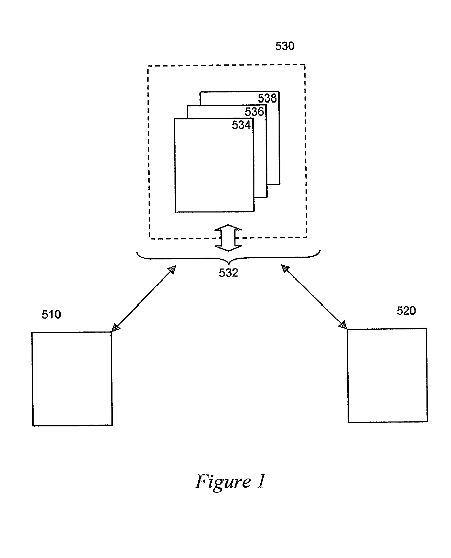

Referring to Figure 1, a video game developed using such a known multi-platform development tool has three main components. The first component is the game developer's game code 510, which characterises the distinctive behaviour of the game. The second component is the game developer's graphics, sounds and similar media assets 520, which give the game its unique appearance. The third component is the multi-platform library 530. This library can be provided or contributed to by the manufacturers of the game platforms and contains a suite of pre-written functions and applications that will be common to most games, and which typically relate to system-level functionality such as generating sounds, manipulating graphics, managing memory resources and the like, but of course can also relate to higher level functions such as collision detection between in-game objects, or text-to-speech conversion. Functions typically found in such multi-platform development tools will be known to the person skilled in the art. It will be appreciated that of course game developers can also develop their own libraries of further code for one or more of the supported plurality of platforms.

The game developer's game code accesses the library functions using an Application Programming Interface (API) 532, which defines standard modes of interaction between the game code and each library function. Notably, in a multi-platform development tool, there will typically be a respective version of each library function for each games platform, with each version of the library function optimised for the operating system and hardware constraints of the respective platform. Each version of the library function will also adhere to the interaction standard set by the API. Thus for example there may be equivalent library functions for the PS3 534, the PSP 536 and the PC 538 that all use the same API. It will also be appreciated that in some cases a single version of a library function may still be common to all the platforms, for example where all the platforms operate in the same way in respect to the function, or where the function relies on calling equivalent library functions to perform platform specific operations in a similar manner to the developer's own game code. Such functions will also adhere to the API standards.

As a result of the above arrangement, each games platform becomes largely transparent to the game developer's code, which simply calls library functions via the API; then, when the code is built for a particular games platform, the relevant version of the library function is used to build an executable version of the game for that games platform.

At run-time (i.e. when the executable version of the game is run on the relevant games platform), the executable library code for such system level functions as displaying textures or outputting sounds then take the game developer's graphics, sounds and/or other media assets 520 and manipulate them according to the local requirements of the games platform to generate the output required in the game.

It is an aim of the present invention to reduce the processing overhead associated with such media manipulation within respective versions of a game built using a multi-platform development tool.

In a first aspect, there is provided a multi-platform development tool according to claim 1.

In another aspect, there is provided a method of multi-platform application development according to claim 7.

Further respective aspects and features of the invention are defined in the remaining appended claims.

The above aspects advantageously reduce the computational and / or memory overhead of an application such as a videogame developed using a multi-platform development tool, by migrating certain runtime operations, relating to the conversion of generic assets to platform specific assets, over to the build process.

Embodiments of the present invention will now be described by way of example with reference to the accompanying drawings, in which:
Figure 1 is a schematic diagram of a conventional multi-platform development tool.
Figure 2 is a schematic diagram of a multi-platform development tool in accordance with an embodiment of the present invention
Figure 3A is a schematic diagram of game objects including generic assets.
Figure 3B is a schematic diagram of game objects in which some generic assets have been modified to be platform specific.
Figure 4 is a flow diagram of a method of multi-platform software development in accordance with an embodiment of the present invention.

A multi-platform development tool and method are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

As noted previously, in the field of software development a 'runtime platform' is a particular environment, or platform, in which a piece of software is run. That environment can be determined both by the hardware and operating system resident on the platform. For example, a PC using Windows® is a different platform to the same PC running Linux, and conversely a PC running Linux is a different platform to a PS3 running Linux. Similarly, 32 bit and 64 bit PCs running either operating system may be distinct platforms. In principle the definition of a platform can also apply to specific software applications, particularly in the case of interpreted code such as Java.

Other resident software elements that can characterise a platform include the graphics API. For example on the PC, so-called OpenGL and DirectX are such APIs, whilst the PS3 uses the so-called Gcm API.

Typically, platforms are a combination of such elements. For example one platform is a 32 bit PC running Windows 7® and an OpenGL API, whilst another platform is the PS3 running the PS3 operating system and a Gcm API. Further platforms can be envisaged by the skilled person, such as a PSP running its operating system and graphics API.

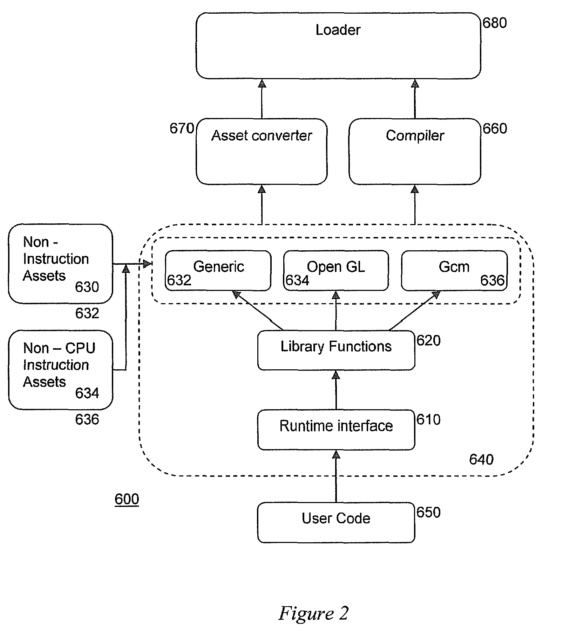

A multi-platform development tool provides a means to generate respective builds of an application (typically a game) on each of a plurality of such different runtime platforms. Referring now to Figure 2, according to an embodiment of the present invention, a multi-platform development tool 600 comprises a set of software classes 640.

These classes comprise a multi-platform instruction library 620, which in turn comprises instructions in the form of source code for one or more library functions. Source code is non-executable code, typically expressed in a user-friendly programming language. Alternatively or in addition, functions may be stored in an intermediate language (typically referred to as object code). However, for the purposes of the present application, any form of instruction that is a non-executable precursor of executable code can be considered as equivalent to source code.

Each function in the library typically has a respective version of its source code for each supported runtime platform. As noted previously, some functions may be transparent to all the supported platforms, in which case only a single instance of a function may be provided, or alternatively to simplify the system, respective but functionally identical copies of such a function may be allocated to each platform so that each platform's complete library can be treated as separate.

As noted previously, the library functions are typically related to operations common among games, and are provided to simplify the process of developing a game by sparing the game developer the need to implement such functions themselves. Functions may include low-level operations such as memory management functions, or graphics manipulation functions. As noted previously, functions typically found in such multi-platform development tools will be known to the person skilled in the art.

The classes also comprise a runtime interface 610. This provides a unified operating interface for the user (i.e. the developer) and also between the user's game code and the library. Thus for example if the game code calls a function named 'Create_Thread_For_Platform', the runtime interface ensures that the correct version of that library function is selected to operate on a particular runtime platform. Thus the developer can switch between runtime platforms transparently.

Finally, the developer also provides non-instruction application assets 630 (hereafter 'game assets'), which are stored in an asset repository 632. These game assets are components of the game that are not to be compiled to form executable code, but which are integrated into the final build of the game. Primarily these are graphics, in the form of 3D mesh geometries, textures and the like, but may also include audio or video data and any other parameter data that may be used by executable code, such as for example physics properties for virtual objects that may be used by a physics processor, or behavioural data such as path data that is used by an in-game AI system.

In addition to non-instruction application assets, the developer may also provide instruction application assets for use other than with the central processor unit of the platform. These non-CPU-instruction application assets 634 include so-called 'shaders' used by the graphics processing unit (GPU) (hereafter `GPU assets'). These GPU assets may be stored in an asset repository 636, which may represent the same or a different memory area to the asset repository for game assets, and separately may be logically the same or distinct when accessed.

Hereafter, the general term 'assets' can be understood to refer to both game assets and GPU assets.

Thus, for example, a 3D mesh of a game character may be created by the developer, and exported in a generic format such as the so-called COLLADA format. The multi-platform development tool then holds this generic mesh data in an asset repository (for example a region of memory or hard disk space assigned to such assets).

When the developer wishes to compile an executable version of their game for a particular target runtime platform supported by the multi-platform development tool, an instruction compiler 660 generates executable software instructions (i.e. an executable version of the game) that use the correct versions of the library functions for the target runtime platform. Typically this utilises predication in the source code files and the selective inclusion of libraries. Thus, for example, a build for the PS3 may include a header file `PhyreOS.h' containing links to a header file 'PhyreOS_PS3.h' that in turn links to relevant PS3 versions of library files, whilst a build for a PC may have a header file 'PhyreOS.h' containing links to header file PhyreOS_Win32.h' that in turn links to relevant PC versions of library files.

By linking the libraries in the source code, potentially a different respective compiler may be used for each platform and still transparently generate a build of the game.

In prior art systems, the resultant version of the game written for a PC and Open GL runtime platform will use executable versions of the relevant library functions at runtime to load the generic COLLADA mesh into the PC's memory, generate Open GL metadata describing the mesh, and move it to the PC's video memory using the Open GL API.

Meanwhile in prior art systems a version of the game written for a PS3 and Gem runtime platform will similarly use executable versions of the relevant library functions at runtime to load the generic COLLADA mesh into the PS3's memory, generate Gem metadata describing the mesh, and move it to the PS3's video memory using the Gem API.

In these prior art systems, the types of operations implemented at runtime to use the assets in this way include reformatting game asset data, which may encompass simply changing a metadata description to a platform-specific standard as described above, to inverting a transparency channel value or even changing the so-called 'endianness' of the data (i.e. the byte-order in a binary representation of a number).

Other operations include changing the state representation of a game asset, for example how the colour 'red' is indicated on the relevant platform, or the location where the asset is initially loaded, and in particular moving or formatting an asset to be loaded into main memory or video memory, or splitting the asset between these memories; different platforms will have different memory architectures, capacities and bandwidths. For GPU assets, runtime operations may also include compilation of a shader for use by a particular GPU.

These run-time operations represent an overhead for the game, both in terms of computing resources to perform the operations and also typically in terms of memory capacity, as working memory is required for example to perform format changes or to generate new metadata.

As noted previously, embodiments of the present invention aim to move some of these platform-specific operations out of runtime and integrate them with the initial build process.

Accordingly, in an embodiment of the present invention an asset converter 670 converts one or more game assets as described below for a respective build of an application on a respective target runtime platform. The asset converter may convert all game assets it can access, or may convert game assets specified by the developer (either directly or via the output of a tool such as a game level editor), or may convert game assets identified by the asset converter as described herein below. In addition, the asset converter may also be configured to convert GPU assets as described later.

For game assets, the asset converter identifies one or more runtime operations that would be implemented on the game asset to convert it to a platform specific asset. The asset converter then applies some or all of these operations to an identified generic version of a game asset, so modifying it to better suit the target runtime environment. To do this, the asset converter may use code corresponding to the code in the instruction library 620 as described later. The resulting modified game asset is stored as a platform specific version of the game asset. To perform the modifications, as applicable the asset converter may make use of a corresponding set of library functions 620 to those accessed by the compiler. Thus the operations required to convert a game asset to the target platform may be built into a version of the instruction library accessible to the asset converter, or equivalently build directly into the asset converter itself.

The asset converter may identify or select such runtime operations using one or more of the following techniques.

Firstly, for some types of game asset there may be a process that is always required at runtime on the target platform (for example converting the endianness of a certain texture file type). Therefore in an embodiment of the present invention the asset converter refers to a look-up table, rule list or similar to identify whether a particular asset requires one or more default operations to be selected and applied to it for a given target platform. As noted above, the operations required to perform the conversion may be in a library or built directly into the asset converter.

Secondly, some library functions may be declared in advance to implement or require certain actions at runtime that can now be implemented at build. Therefore in an embodiment of the present invention the asset converter refers to a look-up table, rule list or similar to detect for a given library function (or optionally for a given version of a library function) whether a particular operation should be selected and applied to one or more relevant assets. Hence in this case the conversion of assets, or the additional conversion of assets (for example so that there are two versions, one platform specific and one platform and library function specific), depends upon which libraries are called by the game code. It will be appreciated that some libraries may require an asset conversion independent of the target runtime (i.e. for all target runtimes; for example, decompressing a compressed generic asset) whilst others may also be dependent on the target runtime (for example, a library may only require a certain conversion pre-process on some platforms). Clearly this technique is more complex than the first technique and would only be beneficial over the first technique if one or more libraries required game asset formats that were non-standard for the target platform.

Thirdly, the asset converter may analyse the source code (at any suitable stage of the compilation process) to identify run-time operations being performed on game assets, and again using look-up tables, rule lists, heuristics or similar detect which corresponding operations to select and implement during the respective build process to facilitate the run-time operations on an appropriate format of the game asset. Of course, the source code itself will be the version specific to the target runtime platform. Again, this technique is more complex than the first technique.

In general, the first of these techniques is therefore likely to be the most commonplace.

Thus for the respective build of the application, the asset converter generates modified versions of the game assets from their generic form in accordance with one or more requirements of the target runtime platform. In particular, the asset converter identifies one or more conversion processes to apply to a generic version of a respective asset in accordance with one or more requirements of the target runtime platform for the respective build, and then as described herein applies the or each conversion process to the generic version of a respective asset to generate a modified version.

Consequently, the libraries for each specfic target platform can be written to assume that they operate on the appropriate format of the asset for their target platform, and hence the runtime asset conversion processes that these libraries previously coded can now be omitted.

As a result the game code using these libraries can be compiled transparently without these runtime asset conversion processes being present in the code.

For GPU assets (for example, generic so-called CgFX shaders), the operation of the asset converter may be platform dependent. For example, if the platform hardware is the PS3, then both the graphics API and the graphics hardware are known in advance and so the CgFX shader source code in a CgFXshader file can be compiled using a Cg compiler.

By contrast, if the platform hardware is a PC, then whilst the graphics API may be assumed, the graphics hardware is indeterminate as there are many different graphics cards available for PCs. Consequently the CgFX shaders may still be left to be compiled at runtime for each individual system.

Thus the asset converter is arranged in operation to detect whether the instruction application assets are to be compiled for the respective target runtime platform.

Advantageously, by moving processes applied to assets at run-time to the build process in the above described manner, runtime overheads previously associated with these processing these assets are reduced, thereby increasing the effective processing and memory capacity of the target platform.

This can be illustrated by returning to the example of a geometry mesh in COLLADA format. When building a PC version of the game the asset converter accesses code for converting the geometry mesh object for use with OpenGL. This code takes the generic representation of the mesh object (which includes metadata and the actual geometry data) and creates a new object to represent the metadata alone whilst moving the actual geometry data to a new, separate mesh object that can be passed directly to the OpenGL API. In addition the metadata may be reformatted as applicable.

The result is that there are now two objects, and the mesh object is smaller than previously due to the removal of the metadata. The asset converter therefore manages changes to the addresses of these objects, so that, for example, pointers and references to the new objects within the compiled code can be updated, as described later.

Correspondingly, when building a PS3 version of the game, the asset processor suitably modifies the mesh object and/or metadata to be compatible with the Gcm graphics API rather than with OpenGL, and relevant memory information (object size, pointers etc.) are used to update the build in a similar fashion to the PC version described above.

Another example is where audio is stored in a generic pulse code modulation (PCM) format. When building a PS3 version of the game, the asset converter accesses code for converting the PCM audio into adaptive differential pulse code modulation (ADPCM) format. Again the result will be a smaller audio object and so the asset converter will manage changes to any pointers to the object during the build process.

The code accessed by the asset processor may be a separate copy of the multi-platform library (not shown), alternatively or in addition having functions to support conversion actions no longer supported by library functions where those functions are written assuming that the asset converter is now performing these actions.

It will be appreciated that during a build of the game, the asset converter has three basic actions it can perform;
i. keep the original asset in the build
ii. delete the original asset from the build
iii. replace the original asset with a platform specific one for the build.

Firstly, an asset may stay the same where there is no impact on performance at runtime, and/or the asset is in a format already supported by the platform. For example, 32 bit RGBA texture data is generally supported by most platforms and hence is unlikely to be modified during any particular build.

Secondly, an asset may not be used for a particular build if for some reason that build does not need it. For example, if a shader program on one platform cannot produce a graphical effect for which a texture has been prepared, then that texture may be deleted from that build. It will also be appreciated that when a generic asset has been modified by the asset converter, then the generic asset itself is not included in the build. Therefore in an embodiment of the present invention the asset converter identifies whether an asset is to be used by the respective build of the application prior to any conversion.

Thirdly, and as noted above, the original asset may be replaced with a version modified to be platform specific. The modified version may be a direct substitute or it may comprise multiple substitutes (for example, tessellating a texture that is too large for the target platform in order to form a plurality of smaller textures). Thus also for example shaders are commonly replaced with a platform specific version.

Hence typically the asset converter will generate modified versions of one or more assets in accordance with one or more requirements of the target runtime platform for the respective build, but not necessarily modified versions of all of the assets.

In an embodiment of the present invention, because the asset converter is part of the build process and performs certain operations to convert assets in response to the target platform type, the asset type and/or the called library function (as applicable), as noted previously functions within the multi-platform library 620 can be simplified to exclude the runtime processes now replicated by the asset converter. In other words, one or more library functions can omit asset conversion operations now performed by the asset converter.

This mitigates the requirement for further modification of the game code (constructed using the library functions) to bypass operations in the library functions now replicated by the asset converter.

Thus in an embodiment of the present invention, there is a code migration from runtime code to build-time code in the asset converter for one or more asset conversion operations. Consequently in this embodiment the library code accessed by the asset processor is typically a modified version of the multi-platform library 620, as noted previously.

The asset converter retains an association between the generic assets and any newly created assets intended to replace them in a particular build for a target platform. For example, assets may be grouped by type into lists. Pointers and references to generic assets are then mapped to the one or more replacement assets as applicable.

Finally for a particular target platform, a loader 680 takes the assets, pointers and references output by the asset converter, together with code output by the relevant compiler, and allocates memory blocks in the target platform for the assets and code.

In an embodiment of the present invention, the loader allocates objects to different memory areas according to object type and target platform. Hence, for example, data types used by OpenGL (such as mesh geometries) may be assigned to video RAM at loading rather than to main memory (i.e. the RAM accessed by the platform CPU) - which would conventionally be done to enable run-time conversion of the generic geometry data before copying the result to video memory.

Thus for example in an embodiment of the present invention, complied shader code for a PS3 build may be allocated directly to video memory, whilst uncompiled shader code for a PC build may be allocated to main memory. Similarly, where geometry data and metadata have been separated as described previously, the loader may assign these data items to separate areas of a memory or even to different memories in the platform (e.g. video memory and main memory respectively).

Meanwhile as noted above the loader will also allocate memory for code objects (for example C++ objects) output by the instruction compiler.

Typically the memory is allocated in such a way that, when a set of assets and /or code is written to a file, the file can subsequently be read from the hard disk or optical disc storing the file, and loaded onto the target platform, as a single block of memory comprising the set of assets and / or code. This improves loading times by reducing the read access times and memory allocation processes required to get the assets and/or code onto the platform.

It will be appreciated that the full set of assets and code for the game (or other application) built for the particular platform may occupy one or more such blocks. Moreover one or more blocks may be loaded into main memory whilst one or more blocks are loaded into video memory.

Potentially, the loader may further update pointers and references as required whilst composing such blocks of data, or may co-operate with the asset converter when it generates new pointers and references so that they are appropriate for the final arrangement of data in blocks.

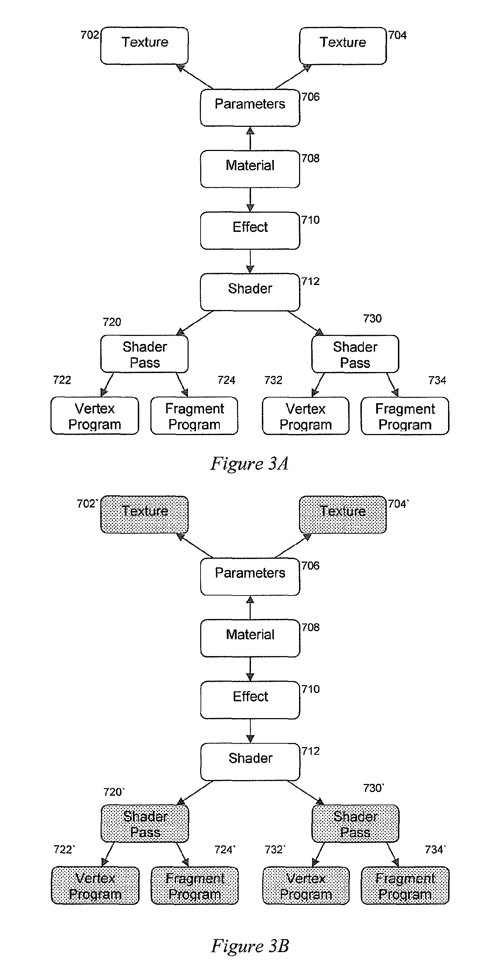

Figures 3A and 3B illustrate the above process of asset conversion in a non-limiting example, for a PS3.

In Figure 3A, a series of objects comprising descriptions of assets and assets themselves is shown. An object having a 'material' class 708 is set by a user to define the visual representation of a mesh, and comprises parameters 706 relating to the visual representation, such as colour data or texture size. In addition in this example there are two textures 702, 704. In addition the material class in this example comprises an 'effect' 710 providing a high-level description of a graphic manipulation process to apply to the mesh and textures. The effect is implemented using a shader descriptor 712 that references two shaders 720, 730 that operate on mesh vertices (722, 732) and texture pixels (724, 734). In the figure, the arrows indicate pointers or references between each element.

The asset compiler analyses this material class object and, in this case, makes the following conversions as illustrated in Figure 3B.

The material class components, the high-level effect description and the shader descriptor are not changed. In addition, the parameters relating to the texture did not require changing for the PS3, but this may be different for another platform.

However, the textures 702, 704 have been converted into PS3 texture objects 702', 704', for example by changing their metadata, endianness or colour representation scheme (depending on the nature of the generic version of the asset). Any change in size or location of these assets will result in a change to the pointer or reference linking the parameters 706 and more generally the object to these converted textures.

Similarly, the shaders 720, 730 and their components have been compiled as the target GPU and graphics API are known in advance for the PS3, resulting in compiled shaders 720', 730' having compiled vertex programs 722' 732' and compiled fragment programs 724', 734'. In this case the asset converter and/or the loader will update the pointer or reference between the shader descriptor 712 and the compiled shaders, for example if the compiled shaders are now loaded directly into video memory instead of main memory.

In an embodiment of the present invention, the relevant library functions or class instances relating to the target platform are also selected, so as to build a runtime version of the application that expects to use assets as formatted by the asset converter.

In this way, a multi-platform development tool 600 in accordance with an embodiment of the present invention is able to reduce the computational and / or memory overhead of an application such as a videogame developed using a multi-platform development tool, by migrating certain runtime operations relating to the conversion of generic assets to platform specific assets to the build process.

It will be appreciated that of course this does not prevent a developer also making direct modifications to assets either during development or at runtime, but this will require the development of multiple versions of the relevant application elements by the developer.

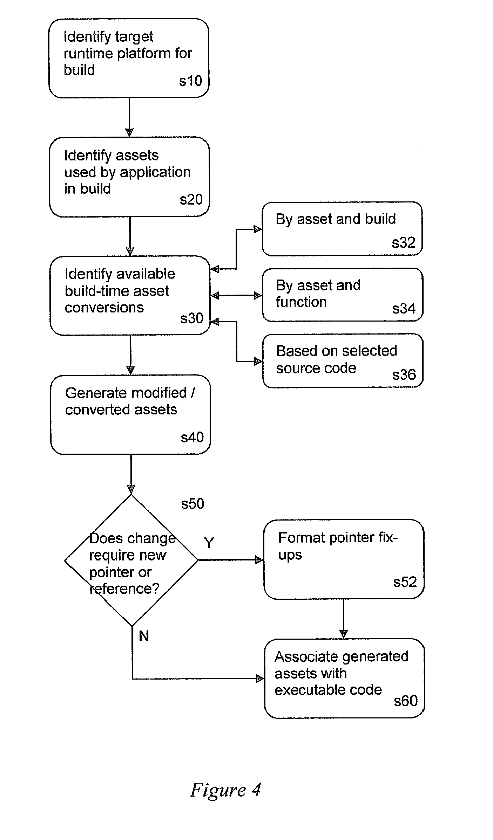

Referring now to Figure 4, the multi platform development tool thus operates in a first step s10 by identifying the target runtime platform for a respective build of the application. This is typically provided as a parameter responsive to the user's selected target. Once identified, the assets (non-instruction assets and optionally GPU assets) used in this build of the application are identified in a second step s20.

In a step s30, the asset converter identifies those conversion steps available for these assets on the target platform. This may use one or more sub-steps selected from a list consisting of a first sub-step s32 in which a conversion step is pre-selected for a particular combination of asset and target runtime in the build, a second sub-step s34 in which a conversion step is pre-selected for a particular combination of asset and function and optionally also target runtime in the build, and a third sub-step s36 in which a selected conversion step is identified from analysis of the selected version of the source code for the target runtime.

In a step 40, the asset converter applies the selected conversion steps to the relevant assets to generate converted (modified) versions of the assets for the relevant runtime platform. In step 50, the asset converter and/or the loader or a similar component linking operation of the multi platform development tool detects whether the modified assets are now a different size, type, or should be at a different location, or comprise any other change that necessitates a change in pointer or reference to the modified asset. If so, then in a step 52 pointer fixups (descriptions of the pointers to be set at runtime) are formatted to resolve to the updated object at runtime; more generally therefore, pointers or references to the modified asset are suitably updated so that the modified asset remains associated with the executable code. Finally in step 60 the assets and the executable code are linked together and preferably arranged in data blocks for efficient loading at runtime.

Hence the multi-platform development tool is arranged in operation to link the executable software instructions to the modified versions of the non-instruction assets.

Thus again a multi-platform development tool 600 implementing a method in accordance with an embodiment of the present invention is able to reduce the computational and / or memory overhead of an application such as a videogame developed using a multi-platform development tool, by migrating certain runtime operations relating to the conversion of generic assets to platform specific assets to the build process.

It will be apparent to a person skilled in the art that variations in the above method corresponding to operation of the various embodiments of the apparatus as described and claimed herein are also considered to be within the scope of the present invention.

Finally, it will be appreciated that the methods disclosed herein may be carried out on conventional hardware suitably adapted as applicable by software instruction or by the inclusion or substitution of dedicated hardware.

Thus the required adaptation to existing parts of a conventional equivalent device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

## Claims

1. A multi-platform development tool for generating respective builds of an application on each of a plurality of different runtime platforms, the multi-platform development tool comprising:
a multi-platform instruction library comprising source code for one or more library functions, each of the one or more library functions having respective versions for the plurality of different runtime platforms;
an asset repository operable to hold non-instruction application assets in a generic form;
an instruction compiler for generating executable software instructions from source code; and
an asset converter; and wherein:
for a respective build of an application on a respective target runtime platform,
the asset converter is arranged in operation to identify one or more non-instruction assets to be used by the respective build of the application;
the asset converter is arranged in operation to select one or more conversion processes to apply to a generic version of a respective non-instruction asset in accordance with one or more requirements of the target runtime platform for the respective build;
the asset converter is arranged in operation to apply the or each selected conversion process to the generic version of a respective non-instruction asset to generate a modified version;
the instruction compiler is arranged in operation to generate executable software instructions based upon the respective version of one or more library functions; and
the multi-platform development tool is arranged in operation to associate the modified versions of the non-instruction assets with the executable software instructions.

2. A multi-platform development tool according to claim 1, in which one or more library functions omit asset conversion operations performed by the asset converter.

3. A multi-platform development tool according to any one of the preceding claims, comprising a memory in which one or more conversion processes are associated with combinations of types of non-instruction asset and types of different runtime platform; and in which
the asset converter is arranged in operation to select one or more conversion processes to apply to a generic version of a respective non-instruction asset by looking up in the memory the one or more conversion processes associated with the respective non-instruction asset and the runtime platform of the respective build.

4. A multi-platform development tool according to any one of the preceding claims, comprising a memory in which one or more conversion processes are associated with one or more library functions; and in which
the asset converter is arranged in operation to select one or more conversion processes to apply to a generic version of a respective non-instruction asset by looking up in the memory the one or more conversion processes associated with a respective library function used in the respective build.

5. A multi-platform development tool according to claim 4 in which the asset converter is arranged in operation to select one or more conversion processes to apply to a generic version of a respective non-instruction asset by looking up in the memory the one or more conversion processes associated with a respective version of a library function corresponding to the runtime platform of the respective build.

6. A multi-platform development tool according to any one of the preceding claims, comprising
an asset repository operable to hold instruction application assets for use with a graphics processing unit; and in which
the asset converter is arranged in operation to detect whether the instruction application assets are to be compiled for the respective target runtime platform.

7. A method of multi-platform application development for generating respective builds of an application on each of a plurality of different runtime platforms, the method comprising the steps of:
storing in a multi-platform instruction library source code for one or more library functions, each of the one or more library functions having respective versions for the plurality of different runtime platforms; and
storing in an asset repository non-instruction application assets in a generic form;
and for a respective build of an application on a respective target runtime platform,
identifying one or more non-instruction assets to be used by the respective build of the application;
selecting one or more conversion processes to apply to a generic version of a respective non-instruction asset in accordance with one or more requirements of the target runtime platform for the respective build;
applying the or each selected conversion process to the generic version of a respective non-instruction asset to generate a modified version;
generating executable software instructions based upon the respective version of one or more library functions; and
associating the modified versions of the non-instruction assets with the executable software instructions.

8. A method of multi-platform application development according to claim 7, comprising the step of:
storing in a memory one or more conversion processes in association with combinations of types of non-instruction asset and types of different runtime platform;
and in which the step of identifying one or more conversion processes comprises:
looking up in the memory the one or more conversion processes associated with a respective non-instruction asset and the runtime platform of the respective build.

9. A method of multi-platform application development according to claim 7 or claim 8, comprising the step of:
storing in a memory one or more conversion processes in association with one or more library functions;
and in which the step of identifying one or more conversion processes comprises:
looking up in the memory the one or more conversion processes associated with a respective library function used in the respective build.

10. A method of multi-platform application development according to claim 9, in which the step of looking up in the memory the one or more conversion processes comprises looking up in the memory the one or more conversion processes associated with a respective version of a library function corresponding to the runtime platform of the respective build.

11. A method of multi-platform application development according to any one of claims 7 to 10, comprising the steps of
storing in an asset repository instruction application assets for use with a graphics processing unit; and
detecting whether the instruction application assets are to be compiled for the respective target runtime platform.

12. A computer program for implementing the steps of any one of claims 7 to 11.
